Europäisches Patentamt

European Patent Office

Office européen des brevets

(11) Publication number: **0 454 912 A1**

# EUROPEAN PATENT APPLICATION

(21) Application number: 90304506.0

(22) Date of filing: 26.04.90

(51) Int. Cl.⁵: **C09K 5/00**

(43) Date of publication of application:
06.11.91 Bulletin 91/45

(84) Designated Contracting States:
DE FR GB IT

(71) Applicant: Lahey, Thomas P.
4 Adolph Sutro Court
San Francisco, CA 94131(US)

Applicant: Abo, Steven F.
1027 Acanto Place
Los Angeles, CA 90049(US)

(72) Inventor: Lahey, Thomas P.
4 Adolph Sutro Court
San Francisco, CA 94131(US)
Inventor: Abo, Steven F.
1027 Acanto Place
Los Angeles, CA 90049(US)

(74) Representative: Stuart, Ian Alexander et al
MEWBURN ELLIS 2 Cursitor Street
London EC4A 1BQ(GB)

(54) Improved chemical cold pack.

(57) An extended lifetime cold pack is provided which cold pack provides an endothermic reaction which is superior in caloric content and provides a substantially reduced lower temperature than cold packs of similar weight. The cold pack comprise a container 10 having first and second compartments (10,16) separated by a barrier which can be opened to mix the contents of the compartments. The first compartment contains a granular solid mixture of an ammonium salt and an organic compound having a high heat of solution/molecular weight ratio and the second compartment contains an aqueous solution. When the contents of the compartments are mixed, the granular components at least partially dissolve in the aqueous solution producing an endothermic reaction.

*FIG. 1*

INTRODUCTION

Technical Field

Apparatus and compositions are provided for use in cold pack devices which maximize the caloric value of the pack based on weight or volume.

Background of the Invention

There is a frequent need to reduce the temperature of a particular site on an animal or person, a reaction mixture, perishable substance, environmental or medical sample, device, or the like. There are many instances where the use of normal coolants, such as ice, refrigerated cold packs or the like, are not readily available, suitable, or convenient. This is particularly true when the cooling or refrigeration is to be performed in remote locations and ice or refrigeration may be unavailable or inconvenient or incompatible with the area to be cooled. Recognizing this problem, cold pack devices have been developed which employ endothermic solubilization or reactions to provide cooling. By providing a portion of the reactants in one cell of the pack and the other portion(s) in a separate cell, where the barrier can be broken at will, cooling can be provided without the various problems and requirements associated with refrigeration.

While these devices find wide use, they suffer from many deficiencies. One of the problems is the relatively short lifetime of the pack, so as to require a relatively large number of packs to maintain the cooling for an extended period of time. There is, therefore, a substantial interest in being able to improve such cold packs and greatly extend their useful lifetime. Another problem is that the coldest temperature achieved in the pack is not sufficiently low to cool the desired item(s) to the prescribed or desired temperature.

Description of the Relevant Literature

U.S. Patent No. 3,977,202 describes a cold pack device employing an anhydrous salt and a water miscible organic liquid as separate components which are mixed to provide cooling. A large number of devices have been described in the literature which can provide specific structures for cooling. See for example U.S. Patent Nos. 4,462,224; 4,596,250; 4,4576,169; 4,527,565; 4,522,640; 4,427,010, which discloses the use of Xylite as a component of a cooling mixture; 4,404,820, which discloses a thin gel-like pad; 4,356,709, which discloses an ice cap; 4,344,303, which discloses a beverage container cooler; or 4,326,533, which discloses a coolant band; 4,240,436, which discloses a therapeutic cold pack; 3,950,158, which discloses a urea cold pack; 4,081,256, which discloses a urea and hydrated sodium acetate moldable gel cold pack; 3,822,705, which discloses a refrigerant wrap for an animal's limb; 3,804,077, which describes a hot or cold pack involving a rupturable container; and 3,244,210 which describes a multi-ply plastic bag structure. U.S. Patent No. 3,149,943 describes a pack having a granular material in one compartment and a liquid in another compartment, where the two compartments have a particular structure to allow for mixing. U.S. Patent 4,049,408 describes a pack with the weight ratio of ammonium nitrate to water being from 1.24:1 to 1.26:1. These patents are not intended to be exhaustive, but merely illustrative of the various structures and embodiments which may be employed, which disclosures are incorporated herein by reference.

SUMMARY OF THE INVENTION

An extended lifetime cold pack is provided which cold pack provides an endothermic reaction which is superior in caloric content and provides a substantially reduced lower temperature than cold packs of similar weight. The cold pack comprises a container having first and second compartments separated by a barrier which can be opened to mix the contents of the compartments. The first compartment contains a granular solid mixture of an ammonium salt and an organic compound having a high heat of solution/molecular weight ratio and the second compartment contains an aqueous solution. When the contents of the compartments are mixed the granular components at least partially dissolve in the aqueous solution producing an endothermic reaction.

BRIEF DESCRIPTION OF THE DRAWINGS

Fig. 1 is a perspective view of one embodiment of a cold pack according to this invention; and

Fig. 2 is a front elevational view of a second embodiment of a cold pack according to this invention.

DESCRIPTION OF THE SPECIFIC EMBODIMENTS

Apparatus and compositions are provided which provide convenient cold packs which have greater caloric content, provide for temperatures substantially below ambient, and extended cooling lifetimes. The cold pack comprises a container having first and second compartments separated by a barrier which can be opened to mix the contents of the compartments. The first compartment contains granular solid reactants comprising an ammonium salt and an organic compound (containing at least one carbon atom) having a high heat of solution/molecular weight ratio. The second compartment contains an aqueous solution. When the contents of the compartments are mixed, the granular reactants will at least partially dissolve in the aqueous solution producing an endothermic reaction.

The reactants will involve granular solids which react with an aqueous solution in an endothermic reaction. The reactants are a mixture of an ammonium salt and an organic compound having a high heat of solution to molecular weight ratio.

The ammonium salt can be organic or inorganic, usually inorganic, desirably ammonium sulfate or ammonium nitrate. While ammonium salts will usually be used, other salts having a high heat of solution to molecular weight ratio may also be used. The heat of solution of a number of exemplary inorganic salts may be found in the CRC Handbook of Chemistry and Physics (page D-122 of the 66th Edition, 1985-1986). The molecular weight of those salts having a high heat of solution can be determined and the ratio calculated. Generally the salts with useful ratios other than ammonium salts will be perchlorate salts, which salts are less desirable. Mixtures of different ammonium salts can also be used.

The organic compound will also have a high heat of solution to molecular weight ratio. Usually the compound will be urea or xylite or combinations thereof. However, other organic compounds having similar heat of solution to molecular weight ratios may also be used. Usually the heat of solution to gram-formula weight at 18° C will be at least about -0.4, more usually at least about -0.5, and preferably at least about -0.6 kcal/g-formula weight.

The solids will be present as particles of from about 10 to 500 U.S. mesh, more usually from about 20 to 200 U.S. mesh, preferably from about 50 to 200 U.S. mesh. The particles employed may be approximately all the same size, that is, within about 20% of the average diameter, or mixtures of particles may be employed, ranging from particles at either end of the range with the range of particles differing by more than 200% in diameter. The ammonium salt and organic compound will usually be mixed together in the compartment but can be separated within the compartment or in separate compartments so long as the granular reactants are separated form the aqueous solution until use and both are mixed with the aqueous solution at the same, or substantially the same, time.

The aqueous solution will usually be water at a pH of between about 5 and 9. Various salt solutions and buffers may be also be used.

The amount of ammonium salt employed in the composition in relation to the amount of aqueous solution will generally be at least 30% by weight and may be as high as 150% by weight of the aqueous solution, generally ranging from about 100% to 130% by weight of the aqueous solution. The amount of urea or xylite employed in the composition will generally be at least 10% by weight of the aqueous solution, generally ranging from about 50% to 100% by weight of the aqueous solution. The aqueous medium will usually be at least 10 ml and may be 1 L or more, usually not more than about 0.5 L. Desirably the concentration of the ammonium salt and the organic compound will be sufficient in relation to the amount of the aqueous solution to produce a saturated solution. By varying the amounts of the ammonium salt and the organic compound, one can define specific specifications as to temperature drop and the amount of cooling which will be obtained by the combination of the reagents

The weight ratio of the inorganic salt, organic compound and aqueous medium will generally be in the range of about 0.1-1:0.1-1:0.1-1, more usually 0.2-1:0.2-1:0.2-1, and preferably 0.5-2:0.5-2:0.5-2.

Ammonium nitrate and urea individually react with the aqueous solution producing an endothermic reaction. When ammonium nitrate and urea are mixed in water together, the magnitude of the endothermic reaction is greater than that of a mixture of either ammonium nitrate and water or urea and water alone. The accompanying temperature drop of the solution and cold pack is greater using the combination of ammonium nitrate and urea than would be if the ammonium nitrate or urea was used alone and mixed with an aqueous solution.

The granular chemical reactants will be introduced into a pouch or other container, so as to be maintained separately from the aqueous solution until mixing is desired. Various containers can be designed for a variety of purposes as previously indicated, when discussing the relevant literature. The simplest container may be a plastic pouch in which is placed the granular chemical reactants and a small sealed bag containing the aqueous solution, which bag can be easily ruptured. When mixing is desired, one need only rupture the internal bag to provide release of the aqueous solution and mixing of the granular chemical reactants with the aqueous solution.

Alternatively, one could employ a bag with two compartments, separated by a clip to seal one compartment from the other, a groove and ridge molded across the pouch, so as to form a seal and define two separate compartments, an internal valve, which can be turned from a closed to an open position, or the like.

There may also be included thickening agents or gels such as the alkali salts of carboxy methylcellulose, poly(meth)acrylic acids, or polyvinylalcohols, fumed silica, and the like which act to form a pouch which maintains the conformation of the site being cooled, so as to provide for a better fit with the site. The subject reagent composition can be used with a wide variety of structures which have been reported in the literature.

The pack may be used for cooling a site at a temperature at or above ambient temperature. To cool the site the barrier between the containers is opened, providing communication between the compartments to mix the contents of the compartments. The cold pack is then applied to the site. By employing these packs, a relatively substantially constant temperature may be maintained below ambient temperature for an extended period of time. The packs can maintain at least about a $10^{\circ}$ C reduction in temperature for at least about an hour. Usually the packs will provide a $35^{\circ}$ C reduction in temperature for about 120 minutes, more usually for about 240 minutes, and frequently for 480 minutes or longer, depending on the particular combination of the reagents or reactants and the size of the pack.

These packs have found particular utility in preserving an environmental soil or groundwater sample. Such samples are placed in a vessel, usually a volatiles bottle, and are desirably stored at about $4^{\circ}$ C until the sample is processed. The samples, which range in volume from about 40 ml to one liter depending on the type of assay to be performed, are generally stored in an ice chest with either ice or previously frozen cold packs such as Blue Ice. It generally takes about 30 minutes to cool an environmental sample to $4^{\circ}$ C using ice. However, ice has several disadvantages, such as not always being available, difficulty of preserving labels, problems with small samples which tend to float when the ice melts. Frozen cold packs generally take about 4 hours to cool the samples to $4^{\circ}$ C, since the packs are rigid and do not effectively contact the sample. Further the packs may no longer be effective at cooling when used for extended periods of time.

In contrast, the packs of the present invention are dry and can be placed around the sample container to provide efficient cooling of a sample vessel. The packs have cooled samples to $4^{\circ}$ C in about 30 minutes. A number of packs can be taken to a remote site and stored for days or months so that the need to refreeze solid ice packs for the day of use or find a source of ice can be avoided.

For further understanding of the invention, the figures will now be considered.

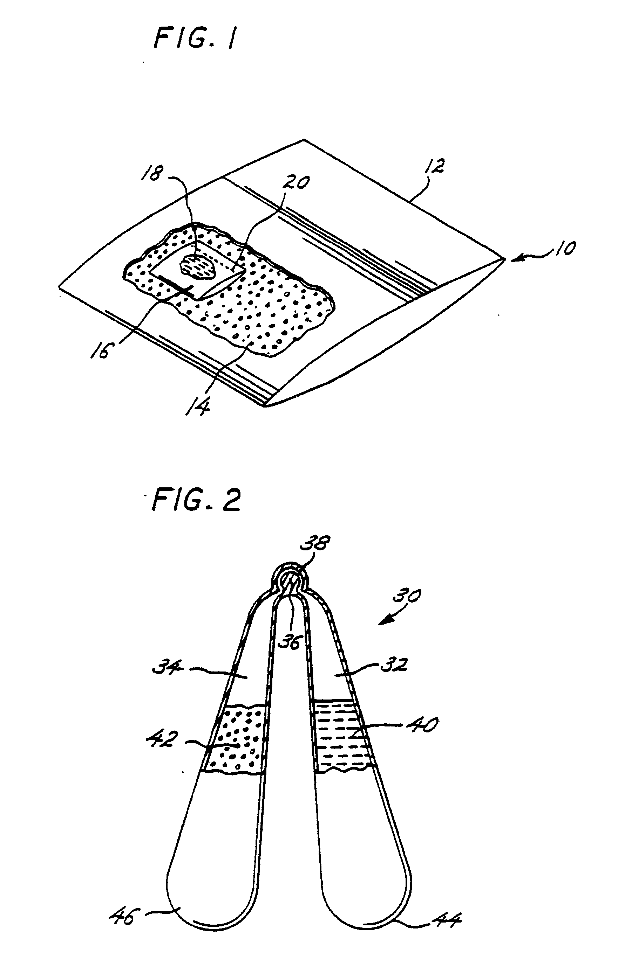

In Figure 1 is depicted in three dimensions, a pouch 10 which is sealed at the top at line 12. The particles 14 and a bag 16 are introduced into the pouch followed by sealing along line 12. The bag 16 contains the liquid reactant 18 and has tearline 20. Tearline 20 can be gripped from the outside and pulled so as to open the bag 16 and release its contents. In this manner, mixing of the liquid with the particles is inhibited until needed.

An alternative to the above pouch is depicted in Figure 2. In Figure 2, the pouch 30 has two compartments 32 and 34. The compartments are sealed one from the other by ridge 36 which is held snugly in groove 38, where the ridge and groove run the width of pouch 30. In compartment 32 is the liquid reactant 40, while the particulate reactant 42 is present in compartment 34. The compartments may be filled by having the compartments initially open at sites 44 and 46 respectively, introducing the reactants into the appropriate compartments, while maintaining the ridge and groove in the sealed position and then sealing the compartments by any convenient means, such as plastic heat sealing, adhesive, or the like. When mixing of the reactants is desired, the ridge 38 may be pulled out of the groove 36, so as to allow for mixing of the reactants.

In order to demonstrate the subject invention, the following experiments were carried out.

To demonstrate the enhanced cooling effect of a composition of ammonium nitrate and urea, a mixture of ammonium nitrate and urea (13.0 grams ammonium nitrate, 10.0 grams urea) was placed in a styrofoam cup and allowed to thermally equilibrate to room temperature ($22^{\circ}$ C). To this mixture was added 10.0 grams of deionized water at $22^{\circ}$ C. The temperature of the solution was monitored using a calibrated thermocouple inserted directly in the solution.

To compare the ammonium nitrate/urea composition to the employment of ammonium nitrate as the sole granular chemical reactant, a control composed of ammonium nitrate (18.7 grams) was allowed to thermally equilibrate to room temperature (22°C) in a styrofoam cup. To the ammonium nitrate was added deionized water (14.3 grams) at 22°C. The temperature of the solution was monitored using a calibrated thermocouple inserted directly into the solution.

A second control composed of urea (16.5 grams) was allowed to thermally equilibrate to room temperature (22°C) in a styrofoam cup. To the urea was added deionized water (16.5 grams) at 22°C. The temperature of the solution was monitored using a calibrated thermocouple placed directly in the solution.

The following table illustrates the results.

| Composition | Initial Temperature (°C) | Final Temperature (°C) |
|---|---|---|
| Ammonium nitrate, urea and water | 22.0 | -17.5 |
| Ammonium nitrate and water | 22.0 | -4.0 |
| Urea and water | 22.0 | 4.0 |

As shown in the table, the ammonium nitrate/urea/water (1.3:1:1) provided a temperature drop of 39.5°C to -17.5°C, while ammonium nitrate/water (1.3:1) and urea/water (1:1) provided temperature drops of 26°C and 18°C, respectively. The mixture was not only able to absorb more calories of heat for the same weight or volume of the mixture, but also provided a substantially reduced final temperature.

It is evident from the above results, that generally improved performance is achieved by employing the composition of the present invention for use in extended use cold packs. The granular chemical reactant compositions provide an endothermic reaction which is superior in caloric content and also provides a substantially reduced lower temperature in comparison to that of cold packs of similar weight. The cooling period is thus extended beyond that of conventional cold packs due to the ability of the improved composition to absorb more heat from the article(s) to be cooled. In this manner, a single pack can provide a greater reduction in temperature for extended periods of time, rather than requiring repeated replacement of the pack. In addition, the packs can be used more efficiently and provide a variety of economies.

All publications and patent applications mentioned in this specification are indicative of the level of skill of those skilled in the art to which this invention pertains. All publications and patent applications are herein incorporated by reference to the same extent as if each individual publication or patent application was specifically and individually indicated to be incorporated by reference.

Although the foregoing invention has been described in some detail by way of illustration and example for purposes of clarity of understanding, it will be obvious that certain changes and modifications may be practiced within the scope of the appended claims.

**Claims**

1. A cold pack comprising:
   a container having first and second compartments separated by a barrier capable of being opened to provide communication between said first and second compartments;
   said first compartment containing (a) an ammonium salt selected from the group consisting of ammonium nitrate, ammonium sulfate, and combinations thereof and (b) an organic compound having a high heat of solution/molecular weight ratio; and
   said second compartment containing an aqueous solution in which said ammonium salt and said organic compound are at least partially soluble.

2. The cold pack of claim 1, wherein said organic compound is urea or xylite.

3. The cold pack of any of claims 1-2, wherein said ammonium salt is ammonium nitrate.

4. The cold pack of any of claims 1-3, wherein said organic compound is urea.

5. The cold pack of any of claims 1-4, wherein said ammonium salt, organic compound, and aqueous solution are provided in an about 0.5-1.3:0.1-1.0:1.0 weight ratio.

6. The cold pack of any of claims 1-5, wherein the weight ratio of said ammonium salt to said aqueous solution is in the range of about 1:1 to about 1.3:1.

7. The cold pack of any of claims 1-6, wherein the weight ratio of urea to said aqueous solution is in the range of about 0.1:1 to about 1:1.

8. The cold pack of any of claims 1-7, wherein the weight ratio of organic compound to said aqueous solution is about 1:1.

9. The cold pack of any of claims 1-8, wherein said ammonium nitrate is present in sufficient quantity to provide a saturated solution when combined with said aqueous solution.

10. The cold pack of any of claims 1-9, wherein said urea is present in sufficient quantity to provide a saturated solution when combined with said aqueous solution.

## FIG. 1

## FIG. 2

European
Patent Office

EUROPEAN SEARCH
REPORT

Application Number

EP 90 30 4506

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JAPANESE PATENT OFFICE, FILE SUPPLIER JAPS; <br> & JP-A-1 040 590 (TEIJIN) <br> * Whole abstract * | 1-4 | C 09 K 5/00 |
| X | JAPANESE PATENT OFFICE, FILE SUPPLIER JAPS; <br> & JP-A-55 152 778 (OZAWA MASAO) <br> * Whole abstract * | 1-20 | |
| X | WORLD PATENT INDEX (LATEST), Derwent Publications Ltd, London, GB; <br> & JP-A-57 096 076 (KOEI CHEM. CO., LTD) <br> * Whole abstract * | 1-4 | |
| A | JAPANESE PATENT OFFICE, Tokyo, JP, FILE SUPPLIER JAPS; <br> & JP-A-57 073 069 (DAIKIN IND. LTD) <br> * Whole abstract * | 1-10 | |
| A | JAPANESE PATENT OFFICE, Tokyo, JP, FILE SUPPLIER JAPS; <br> & JP-A-60 166 375 (SHARP K.K.) <br> * Whole abstract * | 1-10 | TECHNICAL FIELDS SEARCHED (Int. Cl.5) |
| D,A | US-A-3 950 158 (GOSSETT) <br> * Column 2, line 10 - column 4, line 38; figures; claims * | 1,4 | C 09 K |

The present search report has been drawn up for all claims

| Place of search | Date of completion of search | Examiner |
|---|---|---|
| The Hague | 24 October 90 | LEDER M. |